# EUROPEAN PATENT APPLICATION

(11) **EP 1 901 159 A1**
(43) Date of publication of application: **19.03.2008**
(21) Application number: 07016118.7
(22) Date of filing: 16.08.2007
(51) Int. Cl.: G06F 3/06

(54) **A portable disk**

(30) Priority: 07.09.2006 CN 200620129747 U
(71) Applicant: Ritek Corporation, Taiwan 30316 (TW)
(72) Inventor: Shih, Chia-Lin, Taipei City 100 (TW); Lai, Yu-Fan, Taiping City Taichung County 411 (TW)
(74) Representative: Becker Kurig Straus

(57) **Abstract**

A portable disk has a hub device and a memory device. The hub device couples between a host and several downstream devices; the memory device is arranged to store and read the data. The hub device has a hub controller coupled to the host, and several hub ports coupled to the hub controller and respectively coupled to the downstream devices. The memory device has a memory controller coupled to the hub controller, and a memory coupled to the memory controller.

## Description

### BACKGROUND OF THE INVENTION

### Field of Invention

The invention relates to a portable disk and, in particular, to a portable disk having a hub.

### Related Art

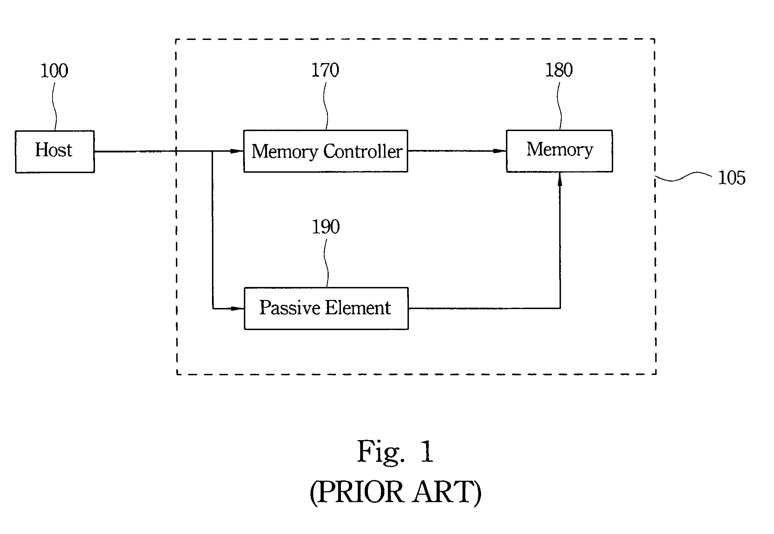

FIG. 1 shows the functional block diagram of a conventional portable disk. The portable disk has been widely used by people for data storage and access. The USB (universal serial bus) portable disk with flash memory in particular has the advantage of small sizes. Therefore, it is the most common portable disk used various devices. The portable disk 105 includes a memory controller 170, a memory 180, and many passive elements 190. The portable disk 105 can be used for data storage or access between a host 100 and the memory 180. When the number of ports on the host is insufficient, using the portable disk may result in other downstream devices (e.g., portable hard drive, printer, keyboard, etc) being inaccessible. Therefore, a new type of portable disk with a hub is highly desirable.

### SUMMARY OF THE INVENTION

In view of the foregoing, the invention provides a portable disk having a hub to solve the problem of insufficient ports.

According to one embodiment of the invention, the portable disk has a hub device and a memory device. The hub device couples between a host and several downstream devices; the memory device is arranged to store and read the data. The hub device has a hub controller coupled to the host, and several hub ports coupled to the hub controller and respectively coupled to the downstream devices. The memory device has a memory controller coupled to the hub controller, and a memory coupled to the memory controller.

According to another embodiment of the invention, the portable disk has a hub controller, several hub ports, a memory controller, and a memory. The hub controller couples to a host. The ports on the hub couple to the hub controller and respectively to several downstream devices. The memory controller couples to the hub controller. The memory couples to the memory controller.

### BRIEF DESCRIPTION OF THE DRAWINGS

These and other features, aspects and advantages of the invention will become apparent by reference to the following description and accompanying drawings which are given by way of illustration only, and thus are not limitative of the invention, and wherein:
FIG. 1 is a functional block diagram of the portable disk in the prior art; and
FIG. 2 is a functional block diagram of the portable disk according to an embodiment of the invention.

### DETAILED DESCRIPTION OF THE INVENTION

The present invention will be apparent from the following detailed description, which proceeds with reference to the accompanying drawings, wherein the same references relate to the same elements.

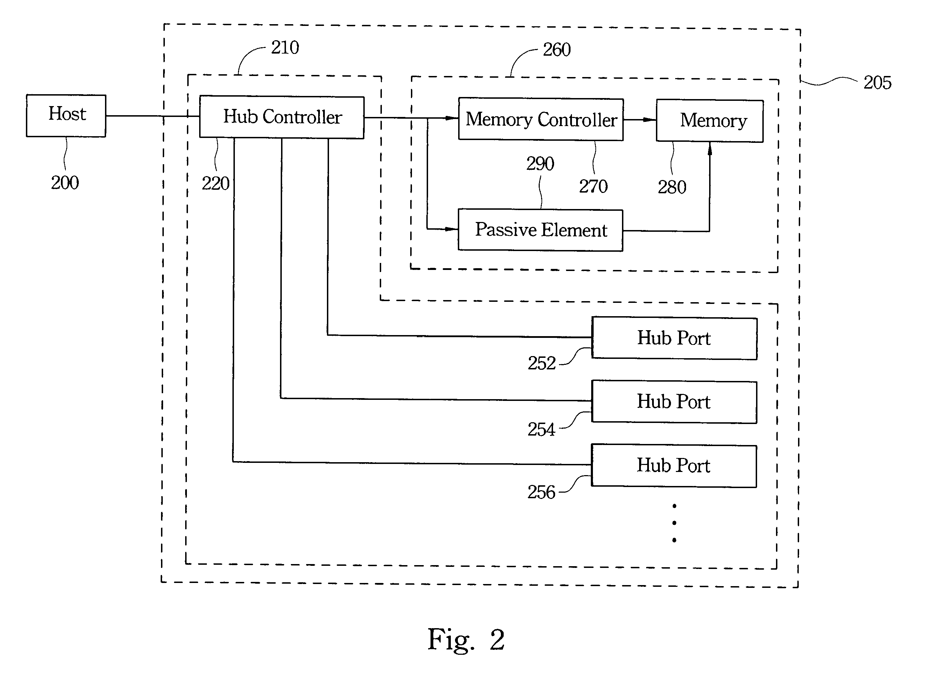

FIG. 2 is the functional block diagram of the portable disk according to one embodiment of the invention. The portable disk 205 includes a hub device 210 and a memory device 260. The hub device 210 couples to a host 200 and several downstream devices (not shown). The memory device 260 is used to store or read data. The hub device 210 has a hub controller 220 coupled to the host 200 and several hub ports 252, 254, 256 coupled to the hub controller and respectively to the downstream devices. The memory device 260 has a memory controller 270 coupled to the hub controller 220 and a memory 280 coupled to the memory controller 260.

The portable disk 205 has several passive elements 290 in the memory device 260, coupled to the memory controller 260 and the memory 280. These passive elements are resistors, capacitors, and inductors, used to produce stable signals or voltages on the memory device 260.

The hub controller 220 is used to control the data storage or access between devices. Therefore, the hub controller 220 can control the data storage or access between the host 200 and the memory device 260. The hub controller 220 can also control the data storage or access between the host 200 or the memory device260 and downstream devices (via the hub ports 252, 254, 256 and the hub controller 220).

Using the hub controller 220, the data can be transmitted among the host 200, the memory device 260, and the downstream devices (not shown). The host 200 here can be a device with logic processing ability, such as a computer or server. The downstream devices include the keyboard, mouse, MP3 player, cell phone, or digital camera that has a USB interface.

The memory 280 inside the portable disk 205 can have many choices, as long as the interface between the memory, the host, and the downstream devices. It can be a flash memory or hard-drive type memory. The flash memory is the most popular one nowadays.

The power management of the portable disk 205 has different regulations. As the host 200 provides power to a portable disk 205, if the upper limit of the electrical current provided by each of the hub ports 252, 254, 256 is defined to be 100 mA, then a downstream device may not be detected and used when it requires more than 100 mA. That is, the portable disk 205 provides a bus power from the host 200. However, according to the USB Association's definition, the portable device 205 is a low power device.

Suppose the upper limit of the electrical current provided by each of the hub ports 252, 254, 256 of the host 200 to the portable disk 205 is above about 500 mA, then the downstream device can obtain more than 500 mA from the corresponding hub port. That is, the portable disk 205 provides a self power form the host 200. According to the USB Association's standard, such a portable disk 205 is not a low power device.

According to the need, whether the portable disk 205 provides a bus power or self power from the host 200 can be determined by the designer, making it a low power device or a device that can provide a larger current.

According to another embodiment of the invention, the portable disk 205 is an integration of a hub controller 220, several hub ports 252, 254, 256, a memory controller 270, and a memory 280.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

While the invention has been described by way of example and in terms of the preferred embodiment, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A portable disk, comprising:
a hub device coupled between a host and a plurality of downstream devices, the hub device including:
a hub controller coupled to the host; and
a plurality of hub ports coupled to the hub controller and respectively to the downstream devices; and
a memory device for storing/reading data, including:
a memory controller coupled to the hub controller; and
a memory coupled to the memory controller.

2. The portable disk of claim 1 further comprising a plurality of passive elements coupled to the memory controller and the memory.

3. The portable disk of claim 1, wherein the hub controller is used to control the data storage/reading between the host and the memory device.

4. The portable disk of claim 1, wherein the hub controller is used to control the data storage/reading between the host and the downstream devices.

5. The portable disk of claim 1, wherein the hub controller is used to control the data storage/reading between the memory device and the downstream devices.

6. The portable disk of claim 1, wherein the memory is a flash memory.

7. The portable disk of claim 1, wherein the memory is a hard-drive memory.

8. The portable disk of claim 1, wherein the host provides a bus power to the portable disk.

9. The portable disk of claim 8, wherein the upper limit of the electrical current provided by each of the hub ports is about 100 mA.

10. The portable disk of claim 1, wherein the host provides a self power to the portable disk.

11. The portable disk of claim 10, wherein the upper limit of the electrical current provided by each of the hub ports is above 500 mA.

12. A portable disk, comprising:
a hub controller coupled to a host;
a plurality of hub ports coupled to the hub controller and respectively to a plurality of downstream devices;
a memory controller coupled to the hub controller; and
a memory coupled to the memory controller.

13. The portable disk of claim 12 further comprising a plurality of passive elements coupled to the memory controller and the memory.

14. The portable disk of claim 12, wherein the hub controller is used to control the data storage/reading between the host and the memory device.

15. The portable disk of claim 12, wherein the hub controller is used to control the data storage/reading between the host and the downstream devices.

16. The portable disk of claim 12, wherein the hub controller is used to control the data storage/reading between the memory device and the downstream devices.

17. The portable disk of claim 12, wherein the memory is a flash memory.

18. The portable disk of claim 12, wherein the memory is a hard-drive memory.

19. The portable disk of claim 12, wherein the host provides a bus power to the portable disk.

20. The portable disk of claim 19, wherein the upper limit of the electrical current provided by each of the hub ports is about 100 mA.

21. The portable disk of claim 12, wherein the host provides a self power to the portable disk.

22. The portable disk of claim 21, wherein the upper limit of the electrical current provided by each of the hub ports is above 500 mA.
